# EUROPÄISCHE PATENTSCHRIFT

(11) **EP 0 987 541 B1**
(45) Veröffentlichungstag und Bekanntmachung des Hinweises auf die Patenterteilung: **09.07.2008**
(21) Anmeldenummer: 99250307.8
(22) Anmeldetag: 03.09.1999
(51) Int. Cl.: G01N 21/954

(54) **Einrichtung zur optischen Qualitätsprüfung einer Rohrinnenoberfläche**
Apparatus for optical quality control of the inner surface of a tube
Dispositif de contrôle optique de qualité de la surface interne d'un tube

(30) Priorität: 16.09.1998 DE 19843209
(43) Veröffentlichungstag der Anmeldung: 22.03.2000
(73) Patentinhaber: Mannesmann Präzisrohr GmbH, 59067 Hamm (DE)
(72) Erfinder: Dörken, Thomas Dipl.-Ing., 59368 Werne (DE)
(74) Vertreter: Meissner, Peter E.

(56) Entgegenhaltungen:
- EP-A- 0 540 018
- DE-A- 3 228 010
- US-A- 4 707 132
- US-A- 5 519 494
- PATENT ABSTRACTS OF JAPAN vol. 007, no. 075 (P-187), 29. März 1983 (1983-03-29) & JP 58 005607 A (SHINMEIWA KOGYO KK), 13. Januar 1983 (1983-01-13)
- PATENT ABSTRACTS OF JAPAN vol. 1998, no. 08, 30. Juni 1998 (1998-06-30) & JP 10 062353 A (MITSUBISHI RAYON CO LTD), 6. März 1998 (1998-03-06)

## Beschreibung

Die Erfindung betrifft eine Einrichtung zur optischen Qualitätsprüfung einer Rohrinnenoberfläche, insbesondere hinsichtlich Längsriefen, gemäß dem Oberbegriff des Patentanspruches 1.

Die Qualität der Innenoberfläche eines Rohres ist beeinflußt von auf den Herstellungsprozeß einwirkenden Störgrößen. Als Störgröße verursachen beispielsweise Fremdkörper im Rohrinnenbereich beim Ziehen von Rohren Längsriefen - sogenannte Ziehriefen - an der Rohrinnenoberfläche. Rohre mit deutlichen Ziehriefen entsprechen nicht den hohen Qualitätsanforderungen an eine möglichst glatte Rohrinnenoberfläche. Daher werden diese insoweit fehlerhaften Rohre am Ende des Herstellungsprozesses beim visuellen Prüfen ausgesondert.

Das Prüfen der Rohre auf Ziehriefen erfolgt in der Praxis durch Sichten der Rohrinnenoberfläche. Blickt man von einer Rohrstirnseite durch das Rohr hindurch, so heben sich Ziehriefen deutlich von der ansonsten glatten Rohrinnenoberfläche ab. Dieses manuelle Prüfen ist jedoch sehr aufwendig und monoton. Eine zuverlässige Prüfung der Rohre ist somit nicht garantiert. Ziehriefen können übersehen werden und sind bei ungünstiger Beleuchtung schwer wahrnehmbar.

Aus der DE 32 29 441 A1 geht ein maschinelles Rohrprüfgerät hervor. Das Rohrprüfgerät umfaßt eine in das zu prüfende Rohr einführbare, um wenigstens 360 Grad drehbare Videokamera, einen vor deren Optik angeordneten Umlenkspiegel, der auf den zu prüfenden Bereich der Innenoberfläche des Rohres gerichtet ist, und eine mit der Videokamera drehbare Beleuchtungseinrichtung zur Beleuchtung des zu prüfenden Bereiches. Das Rohrprüfgerät gestattet durch diesen Aufbau bei einfacher Handhabung eine genaue Betrachtung und Lagebestimmung festgestellter Fehler. Das bekannte Rohrprüfgerät gestattet wegen der Nähe zu der prüfenden Oberfläche zwar eine zuverlässige optische Qualitätsprüfung; es ist jedoch erforderlich, das Gerät durch jedes zu prüfende Rohr hindurchzuführen. Insbesondere für eine Serienproduktion von Rohren ist diese Prüfmethode zu langsam und aufwendig. Weiterhin stößt aufgrund der geometrischen Abmessungen des Prüfgerätes die bekannte Prüfmethode dann an ihre Grenzen, wenn Rohre geringeren Durchmessers geprüft werden sollen.

Aus der JP 10 62353 A ist eine Fehlerprüfeinrichtung für die optische Qualitätsprüfung der zylindrischen Innenoberfläche eines zylindrischen Prüfstückes bekannt.

Diese Einrichtung weist zwei Beleuchtungskörper auf, eine Rückleuchte und eine ringförmige Leuchte, die koaxial zur Achse des zu prüfenden Stückes ausgerichtet sind. Zwischen der im Abstand zur oberen Stirnfläche des zu prüfenden Körpers angeordneten ringförmigen Leuchte und der Stirnfläche ist eine Streuscheibe mit einer kreisrunden Öffnung angeordnet. Im Abstand zur ringförmigen Leuchte sind drei Sensoren vorgesehen, die um 120° versetzt überlappend die zylindrische Innenoberfläche des zu prüfenden Stückes erfassen. Die Sensoren sind über Leitungen mit einem Signalumwandler und einem Rechner verbunden.

In der JP 58 005 607 A ist eine Einrichtung zur Prüfung des Endzustandes der Innenoberfläche eines Betonrohres offenbart.

Die Einrichtung weist eine im Bereich einer Rohrstirnseite angeordnete Leuchte auf, deren Lichtstrahl auf die Innenoberfläche des Betonrohres projeziert wird. Im Lichtstrahlkegel der Leuchte ist ein Leuchtschirm angeordnet Die Helligkeitsverteilung an der Innenoberfläche wird durch einen im Bereich der gegenüber liegenden Rohrstimseite angeordneten Sensor fotografiert. Die ermittelten Signale werden einer Auswerteeinheit zugeführt und mit Referenzwerten verglichen. Im Falle einer Abweichung ist auf einen schlechten Zustand der Innenoberfläche zu schließen, wobei hervorstehende bzw. zurückstehende Bereiche außerhalb der Spezifikation liegen. Die Auswerteeinheit ist mit einer Warnanzeige verbunden, die auf den unzulässigen Zustand der Innenoberfläche hinweisen soll.

Es ist die Aufgabe der vorliegenden Erfindung, eine Einrichtung zur optischen Qualitätsprüfung der Rohrinnenoberfläche zu schaffen, womit schnell und zuverlässig relevante Fehlerstellen auch bei Rohren mit geringem Durchmesser erkannt werden können.

Die Aufgabe wird mit den Merkmalen des Patentanspruchs 1. Die rückbezogenen Unteransprüche geben vorteilhafte Weiterbildungen der Erfindung an.

Die Erfindung schließt die technische Lehre ein, daß koaxial zu einem zu prüfenden Rohr eine diffuse Lichtquelle im Bereich der einen Rohrstirnseite angeordnet ist. Die Lichtquelle emittiert Licht entlang des Rohres zur anderen Rohrstirnseite. In diesem Bereich ist eine koaxial zum Rohr und auf die Rohrstirnseite ausgerichtete Kameraeinheit angeordnet, die ein Bild aufnimmt und ausgangsseitig als Bilddaten bereitstellt. Eine nachgeschaltete Datenverarbeitungseinrichtung ermittelt aus den Bilddaten relevante Fehlerstellen an der blanken Rohrinnenoberfläche.

Die erfindungsgemäße Einrichtung zur optischen Qualitätsprüfung hat den Vorteil, daß diese nicht zur Prüfung in das Rohr eingeführt werden muß. Fehlerstellen bilden sich im Tiefenschärfebereich der Optik charakteristisch ab. Insbesondere eine Längsriefe, die sich meist über einen Großteil der Rohrlänge erstreckt, stellt sich als charakteristische von der Rohrstirnseite radial nach innen verlaufende Strecke dar. Die Ziehriefe erstreckt sich bis zu dem Rohrende an dem der Ziehdorn das Rohr beim Ziehprozeß verläßt. Die erfindungsgemäße Prüfmethode eignet sich insbesondere für einen Einsatz bei der Serienproduktion von Rohren, bei der ein schneller Prüfzyklus gefordert ist. Die Auswertung der Bildinformationen mittels einer Datenverarbeitungseinrichtung gewährleistet eine zuverlässige Qualitätsprüfung.

Vorzugsweise umfaßt die Datenverarbeitungseinrichtung - bei blockschaltbildmäßiger Betrachtungsweise - eine Signalumwandlungseinheit, die die Bilddaten pixelweise mit dem zugehörigen Helligkeitswert aufbereitet und einer nachfolgenden Auswerteeinheit, die anhand eines Fehlererkennungsalgorithmus durch Auswertung des Helligkeitsverlaufes im Bild relevante Fehlerstellen feststellt. Schließlich generiert eine Ausgabeeinheit zumindest zwei Ausgabewerte, von denen ein Ausgabewert ein positives Prüfergebnis und ein anderer Ausgabewert ein negatives Prüfergebnis kennzeichnet.

Die diffuse Lichtquelle kann vorteilhafter Weise nach Art eines Lichtschirmes ausgebildet sein. Ein Lichtschirm liefert flächenhaft gestreute emittiertes Licht, womit sowohl Rohre kleineren als auch größeren Durchmessers besser ausgeleuchtet werden können, als mit einer punktförmigen Lichtquelle.

Es ist günstig, die Kameraeinheit als Flächenkamera auszubilden, wobei zur Gewährleistung einer möglichst großen Tiefenschärfe das Objektiv eine kleine Blende aufweist. Mit einer Flächenkamera ist es möglich, die gesamte Rohrstirnfläche und die sich innerhalb dieser darstellenden Rohrinnenoberfläche mit nur einer Aufnahme zu erfassen. Eine große Tiefenschärfe sorgt für eine weitestgehend scharfe Darstellung der Rohrinnenoberfläche auf große Rohrlänge.

Eine einfache Lösung dafür, daß die zu prüfenden Rohre stets den gleichen Abstand zur Kameraeinheit einnehmen, bietet ein an der prismatischen Auflage für die Rohre endseitig angeordneter Anschlag. An dem Anschlag kommt die der Kameraeinheit zugewandte Rohrstirnfläche zur Anlage.

Um die Prüfeinrichtung an zu prüfende Rohre unterschiedlichen Durchmessers flexibel anpassen zu können, kann die Kameraeinheit mittels einer schlittenartigen Verstelleinrichtung koaxial zur Rohrstirnfläche ausgerichtet werden. Zur Anpassung an große Unterschiede im Rohrdurchmesser zu prüfender Rohre kann die Kameraeinheit vorzugsweise aus mindestens zwei nebeneinander oder übereinander angeordneten Kameras mit Optik unterschiedlicher Brennweite bestehen, die mittels der schlittenartigen Verstelleinrichtung derart austauschbar sind, daß für größere Rohrdurchmesser eine Kamera mit kurzer Brennweite und für kleinere Rohrdurchmesser eine Kamera mit längerer Brennweite koaxial zur Rohrstirnfläche ausrichtbar ist.

Es ist auch denkbar, daß zur Anpassung an große Unterschiede im Rohrdurchmesser zu prüfender Rohre die Kameraeinheit aus einer Kamera besteht, die mit einem Zoom-Objektiv ausgestattet ist.

Der Einsatz der erfindungsgemäßen Einrichtung bei einer Serienproduktion, wo Chargen von Rohren unterschiedlichen Durchmessers zu prüfen sind, wird dadurch vereinfacht, daß in einer Speichereinheit der Datenverarbeitungseinrichtung verschiedene Rohrtypen charakterisierende Parameter hinterlegt sind, wovon je nach zu prüfendem Rohrtyp ein Parametersatz auswählbar ist, der insbesondere der Auswerteeinheit zur Verfügung gestellt wird.

Vorzugsweise sind die Signalumwandlungseinheit, die Auswerteeinheit, die Speichereinheit sowie die Ausgabeeinheit in einem softwaregesteuerten Rechner integriert. Dabei kann die Signalumwandlungseinheit hardwaremäßig eine Framegrabber-Schnittstellenkarte umfassen.

Eine weitere die Erfindung verbessernde Maßnahme besteht darin, daß die Ausgabeeinheit genau drei Ausgabewerte generiert, von denen ein Ausgabewert ein positives Prüfergebnis, ein zweiter Ausgabewert ein negatives Prüfergebnis und ein dritter Ausgabewert eine Störung in der Prüfung anzeigt. Der dritte eine Störung der Prüfungseinrichtung indizierende Ausgabewert führt zu einem Stop einer angesteuerten Rohrsortieranlage, so daß derartige Fehler nicht fälschlicherweise zu einer Zuordnung eines negativen Prüfergebnisses führen, wodurch das Rohr als fehlerhaft ausgesondert werden würde. Eine Störung der Prüfungseinrichtung, die beispielsweise auf eine extrem exzentrische Lage des Rohres gegenüber der Kameraeinheit, auf eine defekte Lichtquelle oder auf Fremdkörper im Rohr, insbesondere Späne, hindeuten könnte, kann bei Unauffindbarkeit der sich als ringförmige Struktur im Bild darstellenden Rohrstirnfläche durch Ausgabe eines entsprechenden Störungs-Ausgabewertes indiziert werden. Anhand des Störungs-Ausgabewertes kann dann die Art der Störung bestimmt werden. Nach Beheben der Störung ist die Einrichtung wieder einsatzbereit.

Der von der Ausgabeeinheit der Datenverarbeitungseinrichtung generierte Ausgabewert wird vorteilhafterweise einer Steuereinheit der nachfolgenden Rohrsortieranlage als Eingangswert zugeführt. Vorzugsweise ist die Steuereinheit als speicherprogrammierbare Steuerung (SPS) ausgebildet. Die gesamte Anlage gestattet so einen vollautomatischen Prüfbetrieb.

Die vorstehend spezifizierte Einrichtung zur optischen Qualitätsprüfung einer Rohrinnenoberfläche wird vorzugsweise nach einem Verfahren betrieben, bei dem die Helligkeitswerte H_{xy} im Auswertebereich des Bildes pixelweise eingelesen werden, und zur Ermittlung des Kontrastes K_{xy} eines Pixels ein Vergleich mit den Helligkeitswerten H von Pixeln der Umgebung durchgeführt wird, und die Ausdehnung A eines pixelmäßig zusammenhängenden Kontrastes K_{xy} als Kontrasterscheinung festgestellt wird, und ein Vergleich von Kontrast K_{xy} und Ausdehnung A der Kontrasterscheinung mit einem vordefinierten Kontrastgrenzwert Kₘ und mindestens einem Form und Größe der Kontrasterscheinung kennzeichnenden Ausdehnungsgrenzwert Am durchgeführt wird, wobei bei Überschreiten des vordefinierten Kontrastgrenzwertes Kₘ und des Ausdehnungsgrenzwertes Am eine Fehlerstellen-Meldung ausgegeben wird, oder wobei bei Nichterreichen des vordefinierten Kontrastgrenzwertes Kₘ und des Ausdehnungsgrenzwertes Am keine Fehlerstellen-Meldung ausgegeben wird.

Speziell für die Bestimmung von Längsriefen mit typischer radialer Ausdehnung A kommt eine Ausgestaltung zur Anwendung, bei der der Auswertebereich des Bildes kreisförmig oder kreisringförmig definiert wird, und zur Erkennung der Riefenlänge die Helligkeitswerte H_{xy} von Pixeln auf einer zu untersuchenden Radialstrecke eingelesen werden, und zur Erkennung der Riefenbreite außerdem die Helligkeitswerte H_{xy} von Pixeln, die quer zur Radialstrecke auf mehreren äquidistant beabstandeten Tangentialstrecken angeordnet sind, eingelesen werden, und der Kontrast K dieser konkret definierten längen- und breitenmäßigen Ausdehnung A_{I}, A_{B} als Kontrasterscheinung mit den vordefinierten Ausdehnungsgrenzwerten Am Riefenlänge und Riefenbreite sowie dem Kontrastgrenzwert Kₘ zur Bestimmung einer Längsriefe als Fehlerstelle verglichen wird, und die zu untersuchende Radialstrecke solange um einen Drehwinkel ϕ versetzt wird, bis der gesamte kreisförmige bzw. kreisringförmige Auswertebereich nach Kontrasterscheinungen abgesucht und ausgewertet worden ist.

Eine weitere das Verfahren zur optischen Qualitätsprüfung verbessernde Maßnahme besteht darin, das zur Zentrierung des kreis- oder kreisringförmigen Auswertebereiches entsprechend der Rohrstirnfläche die sich mit niedrigen Helligkeiteswerten darstellende ringförmige Rohrstirnfläche im Bild gesucht wird. Diese wird anschließend dem kreis- oder kreisringförmigen Auswertebereich entsprechend konzentrisch ausgerichtet.

Weitere die Erfindung verbessernde Maßnahmen werden nachfolgend gemeinsam mit der Beschreibung eines bevorzugten Ausführungsbeispieles der Erfindung anhand der Figuren näher dargestellt. Es zeigt:
- Figur 1: eine schematische Darstellung einer Einrichtung zur optischen Qualitätsprüfung einer Rohrinnenoberfläche,
- Figur 2: eine schematische Darstellung einer Kameraeinheit mit Zoom-Objektiv,
- Figur 3: eine schematische Darstellung einer Kameraeinheit, bestehend aus zwei Kameras mit Objektiven unterschiedlicher Brennweite,
- Figur 4: eine prinzipielle Darstellung eines von der Kameraeinheit aufgenommenen Bildes eines zu prüfenden Rohres,
- Figur 5: ein allgemeiner Algorithmus, welcher dem Fehlererkennungsverfahren zugrunde liegt und
- Figur 6: eine prinzipielle Darstellung der Fehlererkennung von Längsriefen an einer Rohrinnenoberfläche.

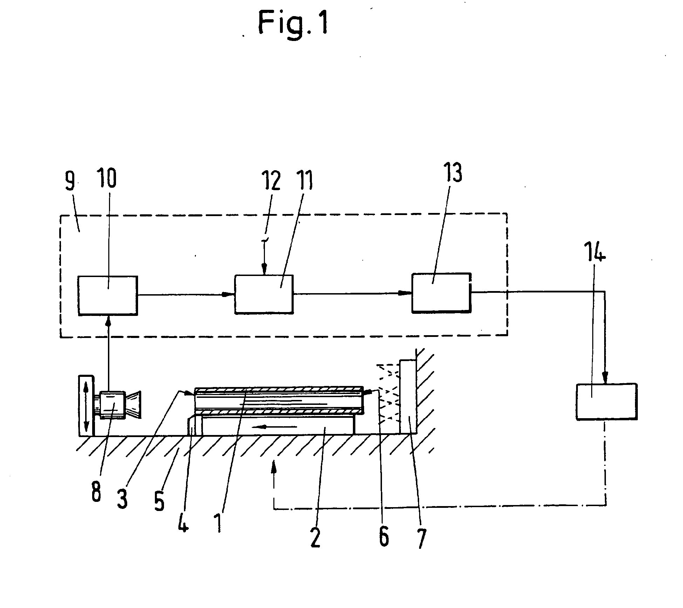

Bei einer Einrichtung zur optischen Qualitätsprüfung einer Rohrinnenoberfläche gemäß Figur 1 liegt ein zu prüfendes Rohr 1 auf einer prismatischen Auflage 2 auf. Das Rohr 1 kommt mit der einen Rohrstirnseite 3 an einem Anschlag 4 zur Anlage. Damit ist die Prüfposition des Rohres 1 innerhalb einer nicht im einzelnen dargestellten Rohrsortieranlage 5 definiert. Die Rohrsortieranlage 5 hat die Funktion, zu prüfende Rohre 1 von einem Eingangsspeicher taktweise auf die prismatische Auflage 2 in Prüfposition zu bringen und nach dem Prüfen, abhängig vom Prüfergebnis in einen Speicher für nicht fehlerhafte oder für fehlerhafte Rohre zu transportieren.

In seiner Prüfposition wird das Rohr 1 von der dem Anschlag 4 gegenüberliegenden Rohrstirnseite 6 her mit einer koaxial angeordneten diffusen Lichtquelle 7 beleuchtet. Die Lichtquelle 7 ist nach Art eines Lichtschirmes ausgebildet. Die Lichtquelle 7 hat die Eigenschaft, diffuses Licht entlang des Rohres 1 zur anderen Rohrstirnseite 3 zu emittieren. Hier ist eine koaxial auf die Rohrstirnseite 3 ausgerichtete Kameraeinheit 8 angeordnet. Die Kameraeinheit 8 ist als Flächenkamera - speziell als CCD-Kamera - ausgebildet. Zur Gewährleistung einer großen Tiefenschärfe weist das Objektiv der Kameraeinheit 8 eine kleine Blende auf Eine möglichst große Tiefenschärfe, die bei kleiner Blende und großer Lichtstärke erzielt werden kann, ist Voraussetzung dafür, relevante Fehlerstellen an der Rohrinnenoberfläche ausreichend scharf auf dem Bild darzustellen, um diese der Auswertung zugänglich zu machen.

Auf dem von der Kameraeinheit 8 aufgenommenen Bild zeigt sich die Rohrstirnfläche 3 als dunkle Ringfläche, innerhalb welcher die Rohrinnenoberfläche radial verzerrt abgebildet ist. Das aufgenommene Bild wird als Videosignal nach der CCIR-Norm einer Datenverarbeitungseinrichtung 9 eingangsseitig zugeführt. Die Datenverarbeitungseinrichtung 9 ermittelt aus den von der Kameraeinheit 8 übertragenen Bilddaten relevante Fehlerstellen, die sich als dunkle Stellen von der hellen Umgebung der Rohrinnenoberfläche abheben.

Die Datenverarbeitungseinrichtung 9 umfaßt in abstrakter blockschaltbildorientierter Betrachtungsweise eine Signalumwandlungseinheit 10, die die Bilddaten pixelweise mit dem zugehörigen Helligkeitswert H_{xy} aufbereitet. Nachfolgend wird mittels einer Auswerteeinheit 11 der Helligkeitsverlauf im Bild analysiert, um relevante Fehlerstellen - welche sich als Kontrasterscheinungen abbilden - festzustellen. Die Auswertung erfolgt unter Nutzung von Grenzparametern, die in einer Speichereinheit 12 je nach Rohrtyp auswählbar hinterlegt sind. Die Grenzparameter stellen Parameter für die Fehlererkennung bezogen auf unterschiedliche Rohrtypen dar. (Eine genaue Beschreibung des Fehlererkennungsalgorithmus folgt nachstehend an anderer Stelle.) Schließlich generiert eine Ausgabeeinheit 13 der Datenverarbeitungseinrichtung 9 drei Ausgabewerte. Der erste Ausgabewert kennzeichnet nach der Erkennung einer relevanten Fehlerstelle ein negatives Prüfergebnis. Eine nachgeschaltete speicherprogrammierbare Steuerung (SPS) 14 steuert die Rohrsortieranlage 5 derart an, daß das fehlerhafte Rohr 1 einem Speicher für Fehlerteile zugeführt wird. Wird der zweite Ausgabewert ausgegeben, der ein positives Prüfergebnis darstellt, welches auf ein Nichtvorhandensein von Fehlerstellen hindeutet, so steuert die speicherprogrammierbare Steuerung (SPS) 14 die Rohrsortieranlage 5 derart an, daß das betreffende Rohr 1 in einen Speicher für fehlerfreie Rohre überführt wird. Der dritte Ausgabewert kennzeichnet eine Störung in der Auswertung, die beispielsweise durch eine exzentrische Lage des Rohres 1 auf der Auflage 2 oder auch auf einen Ausfall der Lichtquelle 7 zurückzuführen sein könnte. Im Falle einer solchen Störung in der Auswertung wird die Einrichtung samt Sortieranlage 5 gestoppt, so daß die Störung beseitigt werden kann.

Die Signalumwandlungseinheit 10, die Auswerteeinheit 11, die Speichereinheit 12, sowie die Ausgabeeinheit 13 sind in einem softwaregesteuerten Rechner abgebildet. Dabei umfaßt die Signalumwandlungseinheit 10 hardwaremäßig eine Frame-Grabberschnittstellenkarte.

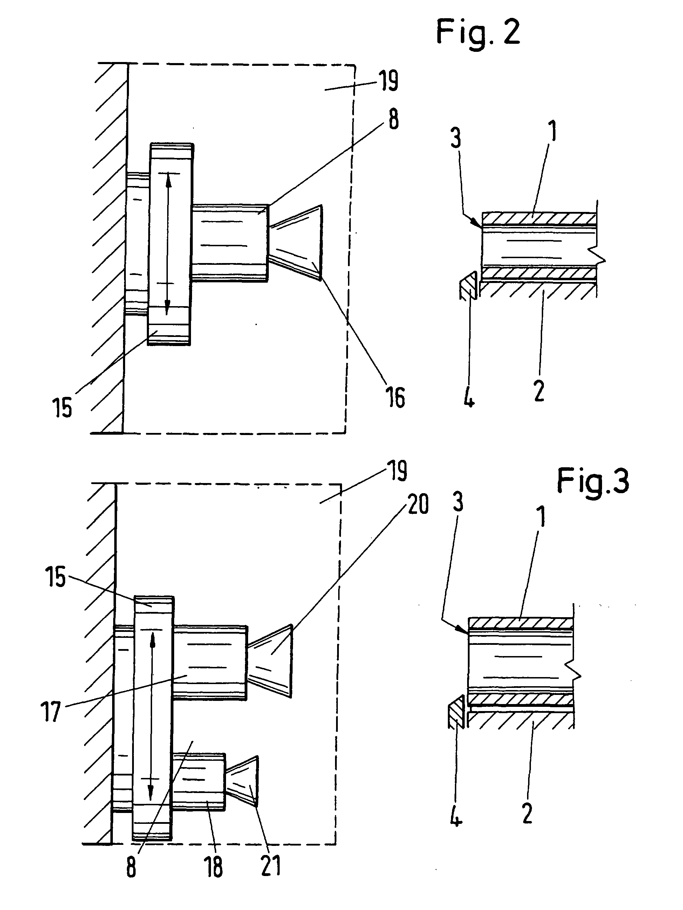

Die zuverlässige Funktion der Fehlererkennung hängt im wesentlichen von der Qualität des von der Kameraeinheit 8 aufgenommenen Bildes ab. Dies setzt gemäß Figur 2 eine möglichst exakt koaxiale Positionierung der Optik der Kameraeinheit 8 zur Rohrstirnfläche 3 des Rohres 1 voraus, das auf der prismatischen Auflage 2 ruht. Die prismatische Auflage 2 gewährleistet eine vertikale Ausrichtung des Rohres 1 gegenüber der Kameraeinheit 8. Der Anschlag 4 sorgt für einen definierten Abstand der Rohrstirnfläche 3 zur Kameraeinheit 8. Weiterhin ist eine schlittenartige horizontale Verstelleinrichtung 15 vorgesehen, die die Kamera 8 trägt und eine Übereinstimmung von Kameraeinheit 8 und Rohr 1 in der horizontalen Ebene sicherstellt.

Die Kameraeinheit 8 ist samt Verstelleinrichtung 15 vor Umwelteinflüssen geschützt in einem Gehäuse 19 mit transparenter Frontfläche, durch die das Bild aufgenommen wird, untergebracht.

Mittels der horizontalen Verstelleinrichtung 15 kann die Prüfeinrichtung an zu prüfende Rohre 1 unterschiedlichen Durchmessers flexibel angepaßt werden. Die Anpassung erfolgt automatisch über eine Vorauswahl des zu prüfenden Rohrtyps in der Datenverarbeitungseinrichtung 9, deren Speicher 12 neben den Parametern für die Fehlerauswertung auch die entsprechenden Parameter für die Kameraverstellung über die Verstelleinrichtung 15 liefert. Die Kameraeinheit 8 läßt sich nicht allein bezüglich ihrer Positionierung verstellen; zur Anpassung an große Unterschiede im Rohrdurchmesser zu prüfender Rohre 1 besteht die Optik der Kameraeinheit 8 aus einem Zoom-Objektiv 16. Die Brennweite des Zoom-Objektives 16 läßt sich damit auf den Rohrdurchmesser des Rohres 1 abstimmen.

Alternativ dazu ist in Figur 3 eine Ausführungsform dargestellt, bei der die Kameraeinheit 8 aus zwei übereinander angeordneten Kameras 17 und 18 besteht, die mittels der Verstelleinrichtung 15 wechselnd vor der Rohrstirnfläche 3 positionierbar sind. Die Kamera 17 ist mit einem Objektiv 20 kurzer Brennweite für größere Rohrdurchmesser ausgestattet. Die Kamera 18 trägt ein Objektiv 21 längerer Brennweite, das sich für kleinere Rohrdurchmesser eignet.

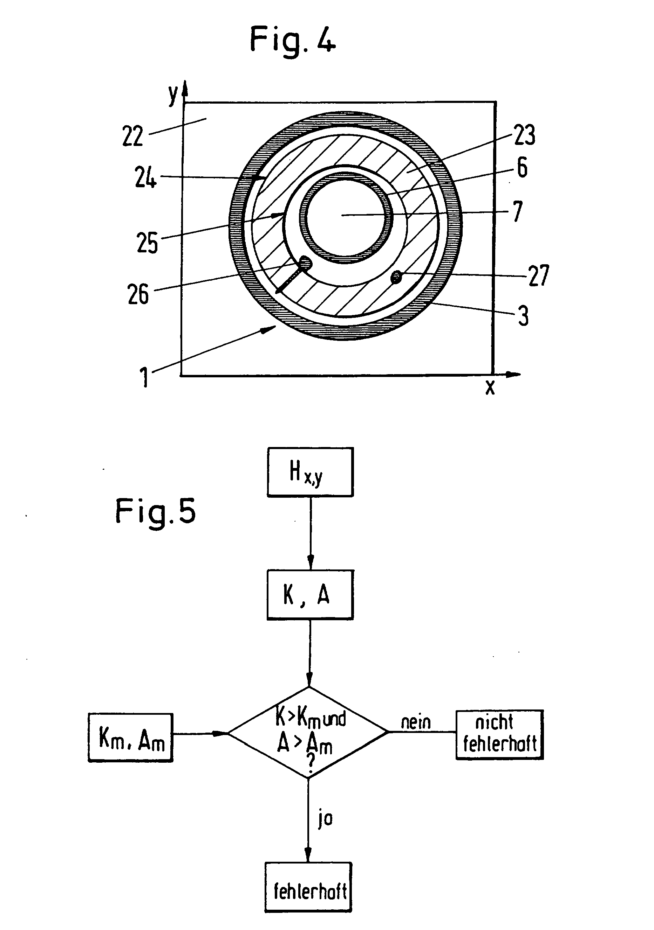

Die Funktionsweise des Fehlererkennungsalgorithmus orientiert sich an einigen allgemeinen Verfahrensschritten. Aus dem von der Kameraeinheit 8 aufgenommenen Bild 22 gemäß Figur 4 wird zunächst ein Auswertebereich 23 bestimmt. Im Bild 22 ist die Rohrstirnfläche 3 als dunkler Kreisring erkennbar. Die gegenüberliegende Rohrstirnfläche 6 hebt sich als Kontur von dem hellen Hintergrund der Lichtquelle 7 ab. Da das Rohr 1 bedingt durch den Herstellungsprozeß selten eine idealerweise gerade Längsachse aufweist, stellt sich regelmäßig die Rohrstirnseite 6 gegenüber der Rohrstirnseite 3 etwas exzentrisch dar. Um einen derartig störenden Einflußfaktor hinsichtlich der Positionierung auszuschalten, wird der Auswertebereich 23 auf den Bereich des Rohres 1 beschränkt, auf dem Fehlerstellen 26, 27 auftreten können. Das ist der Rohrinnenbereich, begrenzt durch die Rohrstirnseite 3 und die Rohrstirnseite 6. Der Auswertebereich 23 ist durch eine Kreisringfläche definiert, deren äußerer Kreis 24 sich der Rohrstirnseite 3 annähert. Ein innerer Kreis 25 ist der Kreisringfläche 6 angenähert. Die optimale Größe beider Kreisdurchmesser 24 und 25 ist durch Versuche ermittelt. Zur Zentrierung des kreisförmigen Auswertebereiches 23 entsprechend der Rohrstirnfläche 3 wird die sich mit niedrigen Helligkeitswerten darstellende ringförmige Rohrstirnfläche 3 gesucht. Danach wird der kreisringförmige Auswertebereich 23 konzentrisch zur Rohrstirnfläche 3 ausgerichtet.

Prinzipiell betrachtet werden zur Fehlererkennung innerhalb des Auswertebereiches 23 systematisch gemäß Figur 5 die Helligkeitswerte H_{x,y} eingelesen. Aus den Helligkeitswerten H_{x,y} benachbarter Pixel können Kontrasterscheinungen K im Auswertebereich 23 ermittelt werden. Weiterhin wird die Form, d. h. die flächenmäßige Ausdehnung A der Kontrasterscheinung K ermittelt. Die beiden Eingangswerte Kontrasterscheingung K und Ausdehnung A werden mit einem vordefinierten Kontrastgrenzwert Kₘ und einem Ausdehnungsgrenzwert Aₘ verglichen. Erst wenn die detektierte Kontrasterscheinung K mindestens den Kontrastgrenzwert Kₘ - also einen genügend großen Helligkeitsunterschied zur Umgebung - und in ihrer Ausdehnung A mindestens den Ausdehnungsgrenzwert Aₘ erfüllt, wird die detektierte Kontrasterscheinung K als Fehlerstelle ausgewertet. Durch diese filterartige Vorgehensweise kann die automatische Fehlererkennung auf tatsächlich relevante Fehlerstellen eingestellt werden. Nicht relevante Stellen, wie Ölflecken, die sich mit geringem Kontrast abbilden, oder einzelne Späne, die eine geringe Ausdehnung aufweisen, werden somit richtigerweise nicht als Fehlerstelle an der Rohrinnenoberfläche interpretiert.

Insbesondere gezogene Rohre können durch den Ziehvorgang verursachte Längsriefen an der Rohrinnenoberfläche als spezielle Fehlerstellen aufweisen. Diese Längsriefen machen das Rohr ab einer bestimmten Ausdehnung A für eine Weiterverarbeitung unbrauchbar. Längsriefen fallen im Auswertebereich 23 nach Figur 4 als Fehlerstelle 26 durch eine typische radiale Ausdehnung A auf.

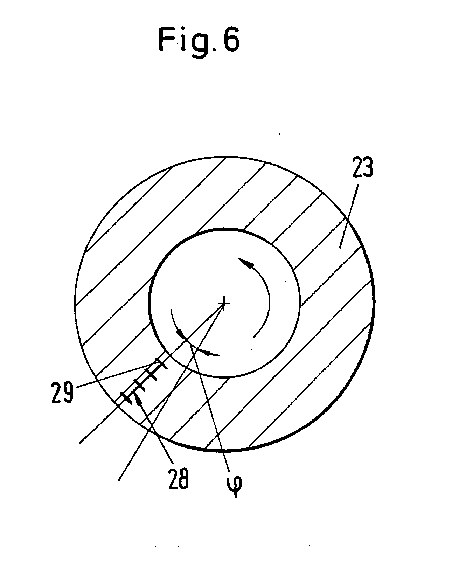

Zu ihrer Erkennung werden gemäß Figur 6 zunächst die Helligkeitswerte H_{x,y} von Pixeln entlang einer Radialstrecke 26 innerhalb des ringförmigen Auswertebereiches 23 eingelesen. Somit kann in die längenmäßige Ausdehnung A₁ eine Längsriefe festgestellt werden. Außerdem werden zur Feststellung der breitenmäßigen Ausdehnung A_{b} einer Längsriefe die Helligkeitswerte H_{x,y} von Pixeln, auf mehreren quer zur Radialstrecke 26 äquidistant beabstandet angeordneten Tangentialstrecken 27 eingelesen. Die in dieser konkret definierten längen- und breitenmäßigen Ausdehnung Aₗ, A_{b} liegende Kontrasterscheinung K wird mit den vordefinierten Ausdehnungsgrenzwerten Aₘ (Riefenlänge und Riefenbreite) sowie dem Kontrastgrenzwert Kₘ zur Bestimmung einer Längsriefe als Fehlerstelle verglichen. Die zu untersuchende Radialstrecke 26 wird so lange um einen Drehwinkel ϕ versetzt, bis der gesamte kreisringförmige Auswertebereich 23 nach Längsriefen abgesucht ist.

Durch diese Verfahrensweise lassen sich Längsriefen als gezielte Fehlerstellen an Rohrinnenoberflächen erkennen, so daß fehlerhafte Rohre schnell und zuverlässig ausgesondert werden können.

### Bezugszeichenliste

- **1**: Rohr
- **2**: Auflage
- **3**: Rohrstirnseite
- **4**: Anschlag
- **5**: Rohrsortieranlage
- **6**: Rohrstirnseite
- **7**: Lichtquelle
- **8**: Kameraeinheit
- **9**: Datenverarbeitungseinrichtung
- **10**: Signalumwandlungseinheit
- **11**: Auswerteeinheit
- **12**: Speichereinheit
- **13**: Ausgabeeinheit
- **14**: speicherprogrammierbare Steuerung (SPS)
- **15**: Verstelleinrichtung
- **16**: Zoom-Objektiv
- **17**: Kamera
- **18**: Kamera
- **19**: Gehäuse
- **20**: Objektiv (kurze Brennweite)
- **21**: Objektiv (lange Brennweite)
- **22**: Bild
- **23**: Auswertebereich
- **24**: Kreis, außen
- **25**: Kreis, innen
- **26**: Fehlerstelle (Ziehriefe)
- **27**: Fehlerstelle (Fleck)
- **28**: Radialstrecke
- **29**: Tangentialstrecke

## Patentansprüche

1. Einrichtung zur optischen Qualitätsprüfung der Innenoberfläche eines Rohres insbesondere hinsichtlich Längsriefen, mit einer koaxial zum Rohr (1) und auf eine Rohrstirnseite (3) ausgerichteten Kameraeinheit (8), die ein Bild aufnimmt und ausgangsseitig als Bilddaten an eine nachgeschaltete Daten verarbeitungseinrichtung (9) bereitstellt,
**dadurch gekennzeichnet,**
**dass** im Wesentlichen koaxial zum auf einer prismatischen Auflage (2) gehaltenen Rohr (1) eine diffuse Lichtquelle (7) im Bereich der anderen Rohrstirnseite (6) angeordnet ist, die Licht entlang des Rohres (1) zur ersten Rohrstirnseite (3) emittiert, wobei das Rohr (1) mittels eines Anschlages (4) fokussierend beabstandet vor der Kameraeinheit (8) angeordnet ist.

2. Einrichtung nach Anspruch 1,
**dadurch gekennzeichnet,**
**dass** die Datenverarbeitungseinrichtung (9) eine Signalumwandlungseinheit (10) umfaßt, die die Bilddaten pixelweise mit dem zugehörigen Helligkeitswert H_{xy} aufbereitet und einer nachfolgenden Auswerteeinheit (11) zur Verfügung stellt, die anhand eines Fehlererkennungsalgorithmus durch Auswertung des Helligkeitsverlaufes im Bild die relevanten Fehlerstellen feststellt, die sich als dunkle Stellen von der hellen Umgebung der Rohrinnenoberfläche abzeichnen, wobei eine Ausgabeeinheit (13) zumindest zwei Ausgabewerte generiert, von denen ein Ausgabewert ein positives Prüfergebnis und ein anderer Ausgabewert ein negatives Prüfergebnis kennzeichnet.

3. Einrichtung nach Anspruch 1,
**dadurch gekennzeichnet,**
**dass** zur Anpassung an unterschiedliche Rohrdurchmesser von zu prüfenden Rohren (1) die Kameraeinheit (8) mittels einer schlittenartigen Verstelleinrichtung (15) horizontal übereinstimmend zur Rohrstirnseite (3) ausrichtbar ist.

4. Einrichtung nach Anspruch 1 bis 3,
**dadurch gekennzeichnet**,
das zur Anpassung an große Unterschiede im Rohrdurchmesser zu prüfender Rohre (1) die Kameraeinheit (8) aus mindestens zwei nebeneinander oder übereinander angeordneten Kameras (17,18) mit Optik unterschiedlicher Brennweite besteht, die mittels einer schlittenartigen Verstelleinrichtung (15) derart austauschbar sind, daß für größere Rohrdurchmesser eine Kamera (17) mit kurzer Brennweite und für kleinere Rohrdurchmesser eine Kamera (18) mit langer Brennweite koaxial zur Rohrstirnseite (3) stellbar ist.

5. Einrichtung nach Anspruch 4,
**dadurch gekennzeichnet,**
**dass** die Kameraeinheit (8) samt Verstelleinrichtung (15) geschützt in einem Gehäuse (19) mit transparenter Frontfläche untergebracht ist.

6. Einrichtung nach einem der vorstehenden Ansprüche,
**dadurch gekennzeichnet,**
**dass** in einer Speichereinheit (12) der Datenverarbeitungseinrichtung (9) Parameter für verschiedene Rohrtypen hinterlegt sind, die je nach zu prüfendem Rohrtyp auswählbar sind und zumindest der Auswerteeinheit (11) zur Verfügung stehen.

7. Einrichtung nach einem der vorstehenden Ansprüche,
**dadurch gekennzeichnet,**
**dass** das von der Kameraeinheit (8) aufgenommene Bild der Rohrstirnseite (3) mit einem definierbaren Auswertebereich (23) begrenzbar ist, der nur den relevanten Prüfbereich der Fehlererkennung zugänglich macht.

8. Einrichtung nach einem der vorstehenden Ansprüche 2-7,
**dadurch gekennzeichnet,**
**dass** die Ausgabeeinheit (13) genau drei Ausgabewerte generiert, von denen ein Ausgabewert ein positives Prüfergebnis, ein zweiter Ausgabewert ein negatives Prüfergebnis und ein dritter Ausgabewert eine Störung in der Prüfung kennzeichnet.

9. Einrichtung nach einem der vorstehenden Ansprüche 2-8,
**dadurch gekennzeichnet,**
**dass** der von der Ausgabeeinheit (13) der Datenverarbeitungseinrichtung (9) generierte Ausgabewert einer Steuereinheit (14) einer Rohrsortieranlage (5) als Eingangswert dient.

10. Einrichtung nach Anspruch 9,
**dadurch gekennzeichnet,**
**dass** die Steuereinheit (14) als speicherprogrammierbare Steuerung (SPS) ausgebildet ist.

## Claims

1. A device for the optical quality inspection of the internal surface of a pipe, particularly with respect to longitudinal grooves, comprising a camera unit (8) oriented coaxially to the pipe (1) and towards a pipe end face (3), which camera unit takes a picture and supplies it on its output side as picture data to a downstream data processing device (9),
**characterised**
**in that** a diffuse light source (7) is arranged in the region of the other pipe end face (6) substantially coaxially to the pipe (1) held on a prismatic support (2), which light source emits light along the pipe (1) to the first pipe end face (3), the pipe (1) being spaced in front of the camera unit (8) by means of a stop (4) to allow focussing.

2. A device according to Claim 1,
**characterised**
**in that** the data processing device (9) comprises a signal conversion unit (10) which prepares the picture data in pixels with the associated brightness value H_{xy} and supplies them to a following evaluation unit (11) which with the aid of a defect recognition algorithm determines the relevant defect locations by evaluating the brightness variation in the picture, which defect locations stand out as dark points from the light environment of the pipe's internal surface, an output unit (13) generating at least two output values, of which one output value denotes a positive inspection result and another output value denotes a negative inspection result.

3. A device according to Claim 1,
**characterised**
**in that**, to adapt to different pipe diameters of pipes (1) to be inspected, the camera unit (8) may be oriented by means of a slide-like adjusting device (15) so as to coincide horizontally with the pipe end face (3).

4. A device according to Claim 1 to 3,
**characterised**
**in that**, to adapt to large differences in the pipe diameter of pipes (1) to be inspected, the camera unit (8) consists of at least two cameras (17, 18), arranged side by side or one above the other, with lenses of different focal length, which cameras are interchangeable by means of a slide-like adjusting device (15) in such a way that for larger pipe diameters a camera (17) with a short focal length and for smaller pipe diameters a camera (18) with a long focal length may be positioned coaxially to the pipe end face (3).

5. A device according to Claim 4,
**characterised**
**in that** the camera unit (8) together with the adjusting device (15) is protectively housed in a housing (19) with a transparent front surface.

6. A device according to one of the preceding claims,
**characterised**
**in that** parameters for different types of pipes are stored in a memory unit (12) of the data processing device (9), which parameters may be selected according to the type of pipe to be inspected and are available at least to the evaluation unit (11).

7. A device according to one of the preceding claims,
**characterised**
**in that** the picture of the pipe end face (3) taken by the camera unit (8) may be limited by a definable evaluation region (23) which makes only the relevant inspection region accessible to the defect recognition.

8. A device according to one of the preceding Claims 2-7,
**characterised**
**in that** the output unit (13) generates precisely three output values, one output value of which denotes a positive inspection result, a second output value denotes a negative inspection result, and a third output value denotes a fault in the inspection.

9. A device according to one of the preceding Claims 2 - 8,
**characterised**
**in that** the output value generated by the output unit (13) of the data processing device (9) serves as input value to a control unit (14) of a pipe sorting system (5).

10. A device according to Claim 9,
**characterised**
**in that** the control unit (14) is a programmable controller (SPS).

## Revendications

1. . Dispositif destiné au contrôle optique de la qualité de la surface intérieure d'un tube, en particulier en ce qui concerne les stries longitudinales, comportant une unité de caméra (8) coaxiale au tube (1) et pointée sur un côté frontal de tube (3), laquelle enregistre une image et la transmet côté sortie sous forme de données d'image à un dispositif de traitement de données (9) branché en aval,
**caractérisé en ce qu'**il est agencé, essentiellement de manière coaxiale au tube (1) tenu sur un support prismatique (2), dans la zone de l'autre côté frontal de tube (6), une source de lumière diffuse (7), laquelle émet de la lumière le long du tube (1) vers le premier côté frontal de tube (3), le tube (1) étant agencé, au moyen d'une butée (4), à distance focale devant l'unité de caméra (8).

2. . Dispositif selon la revendication 1,
**caractérisé en ce que** le dispositif de traitement de données (9) comprend une unité de conversion de signaux (10) qui traite les données d'image par pixel avec la valeur de luminosité H_{xy} correspondante et les transmet à une unité d'analyse (11) située en aval, laquelle, à l'appui d'un algorithme de détection de défauts, par analyse de l'allure de la luminosité dans l'image, détermine les endroits défectueux pertinents, lesquels ressortent en tant que points sombres dans l'environnement clair de la surface intérieure de tube, une unité de sortie (13) générant au moins deux valeurs de sortie, dont une valeur de sortie caractérise un résultat d'essai positif et une autre valeur de sortie un résultat d'essai négatif.

3. . Dispositif selon la revendication 1,
**caractérisé en ce que**, pour l'adaptation à différents diamètres de tubes à tester (1), l'unité de caméra (8) peut être orientée horizontalement de manière à coïncider avec le côté frontal de tube (3) au moyen d'un dispositif de réglage de type chariot (15).

4. . Dispositif selon les revendications 1 à 3,
**caractérisé en ce que**, pour l'adaptation à de grandes différences des diamètres de tubes à tester (1), l'unité de caméra (8) est constituée d'au moins deux caméras (17, 18) agencées l'une à côté de l'autre ou l'une au-dessus de l'autre avec une optique de focale différente, lesquelles peuvent être interchangées au moyen d'un dispositif de réglage de type chariot (15) de telle manière que, pour des diamètres de tube plus grands, une caméra (17) avec une focale courte, et, pour des diamètres de tube plus petits, une caméra (18) avec une focale longue, puisse être placée de manière coaxiale au côté frontal de tube (3).

5. . Dispositif selon la revendication 4,
**caractérisé en ce que** l'unité de caméra (8), avec le dispositif de réglage (15), est logée de manière protégée dans un boîtier (19) ayant une surface frontale transparente.

6. . Dispositif selon l'une des revendications précédentes,
**caractérisé en ce que**, dans une unité de mémoire (12) du dispositif de traitement de données (9), il est enregistré des paramètres correspondant à différents types de tubes, lesquels peuvent être sélectionnés en fonction du type de tube à tester et sont au moins à la disposition de l'unité d'analyse (11).

7. . Dispositif selon l'une des revendications précédentes,
**caractérisé en ce que** l'image du côté frontal de tube (3) enregistrée par l'unité de caméra (8) peut être délimitée par une zone d'analyse (23) pouvant être définie, laquelle zone d'analyse ne donne accès qu'à la zone d'essai pertinente pour la détection de défauts.

8. . Dispositif selon l'une des revendications précédentes 2 à 7,
**caractérisé en ce que** l'unité de sortie (13) génère précisément trois valeurs de sortie, dont une valeur de sortie caractérise un résultat d'essai positif, une deuxième valeur de sortie un résultat d'essai négatif et une troisième valeur de sortie un dysfonctionnement dans l'essai.

9. . Dispositif selon l'une des revendications précédentes 2 à 8,
**caractérisé en ce que** la valeur de sortie générée par l'unité de sortie (13) du dispositif de traitement de données (9) fait office de valeur d'entrée pour une unité de commande (14) d'une installation de triage de tubes (5).

10. . Dispositif selon la revendication 9,
**caractérisé en ce que** l'unité de commande (14) est réalisée sous la forme d'une commande par programme enregistré.
